# EUROPÄISCHE PATENTSCHRIFT

(11) **EP 3 476 654 B1**
(45) Veröffentlichungstag und Bekanntmachung des Hinweises auf die Patenterteilung: **13.01.2021**
(21) Anmeldenummer: 18202341.6
(22) Anmeldetag: 24.10.2018
(51) Int. Cl.: B60R 1/00, B60R 11/04, B60R 1/076

(54) **HALTEVORRICHTUNG FÜR EIN KRAFTFAHRZEUG**
HOLDER DEVICE FOR A MOTOR VEHICLE
DISPOSITIF DE RETENUE POUR VÉHICULE AUTOMOBILE

(30) Priorität: 26.10.2017 DE 102017125101
(43) Veröffentlichungstag der Anmeldung: 01.05.2019
(73) Patentinhaber: MEKRA Lang GmbH & Co. KG, 91465 Ergersheim (DE)
(72) Erfinder: Lang, Werner, 91465 Ergersheim (DE); Wotschal, Alexander, 91593 Burgbernheim (DE); Centmayer, Stefan, 91465 Ergersheim (DE)
(74) Vertreter: Kramer Barske Schmidtchen Patentanwälte PartG mbB

(56) Entgegenhaltungen:
- EP-A1- 3 178 701
- EP-A1- 3 409 540
- EP-A1- 3 466 765
- WO-A1-00/47447
- WO-A1-03/037681
- WO-A1-2015/062602
- WO-A1-2017/178859
- DE-A1-102010 005 638
- DE-A1-102013 217 081
- DE-A1-102016 102 508
- DE-U1-202015 106 118

## Beschreibung

Die vorliegende Erfindung betrifft eine Haltevorrichtung für ein Kraftfahrzeug, insbesondere eine Haltevorrichtung für eine Kamera zur Verwendung an Nutzfahrzeugen, und ein Kamera-Monitor-System mit solch einer Haltevorrichtung.

Bei Kraftfahrzeugen sind abhängig von dem Typ des Kraftfahrzeugs, wie beispielsweise Krafträdern, Kraftfahrzeugen zur Personenbeförderung, Kraftfahrzeugen zur Güterbeförderung, usw. sogenannte Sichtfelder gesetzlich vorgegeben, welche durch eine Einrichtung für indirekte Sicht abgebildet werden müssen und durch den auf einem Fahrersitz sitzenden Fahrer jederzeit über die Einrichtung für indirekte Sicht einsehbar sein müssen. Gewöhnlicher Weise werden die Einrichtungen für indirekte Sicht durch Spiegel gebildet.

In letzter Zeit werden solche Einrichtungen für indirekte Sicht zunehmend durch Kameras bzw. Bildaufnahmeeinheiten ersetzt und/oder ergänzt, die derart ausgebildet sind, dass eine außen am Fahrzeug angebrachte Kamera ein Bild von der Umgebung des Fahrzeugs aufnimmt und das Bild, ggf. nach Bildbearbeitung, auf einer im Innenraum des Fahrzeugs angebrachten Anzeigeeinrichtung für den Fahrer einsehbar dargestellt wird.

Derzeit sind solche Kameras bzw. Bildaufnahmeeinheiten fest oder lösbar meist unmittelbar an der Fahrzeugkarosserie montiert, d.h. sie stehen kaum bis weit von der Fahrzeugkarosserie vor. Wenn eine Kamera derart am Fahrzeug angebracht ist, ist es jedoch ohne die Verwendung von Bildaufnahmeeinheiten mit verhältnismäßig starkem Weitwinkel kaum möglich, mit ähnlichen Blickwinkeln, die der Fahrer beim Blick in einen herkömmlichen Seitenspiegel haben würde, seitliche Sichtbereiche neben dem Fahrzeug zu erfassen. Gerade im Bereich von Nutzfahrzeugen ist es jedoch wünschenswert, auf der Fahrerseite und der Beifahrerseite jeweils einen ebenen und horizontalen Teil der Fahrbahn von bestimmter Breite einsehbar zu machen, der sich ab einer festgelegten Entfernung hinter den Augenpunkten des Fahrzeugführers bis zum Horizont erstreckt. Die Breite dieses Streifens entspricht bei der Verwendung von herkömmlichen Spiegeln in einer festgelegten Entfernung hinter den Augenpunkten des Fahrzeugführers dem Sichtfeld eines Weitwinkelspiegels (beispielsweise Sichtfeld IV wie in der ECE R46 definiert), in kürzerer Entfernung hinter den Augenpunkten des Fahrzeugführers dem Sichtfeld eines Hauptspiegels (beispielsweise Sichtfeld II wie in der ECE R46 definiert), dessen vorgegebene einsehbare Breite, d.h. Erstreckung in Fahrzeugquerrichtung, geringer als die des Weitwinkelspiegels ist. Solche Sichtbereiche mit unmittelbar am Fahrzeug angebrachten Kamerasystemen abzubilden, ist schwierig.

Darüber hinaus ist bei Nutzfahrzeugen der Ersatz von herkömmlichen Spiegeln durch Kamerasysteme zwar insofern strömungstechnisch günstig und sich vorteilhaft auf den Kraftstoffverbrauch auswirkend, dass die Umströmung des Fahrzeugs nicht durch ab- oder vorstehende Spiegel negativ beeinflusst wird. Allerdings werden in letzter Zeit Spiegel auch gezielt geformt, um bestimmte Strömungsverhältnisse, die sich günstig auf den Kraftstoffverbrauch auswirken, auszulösen. Bei einer unmittelbar an der Fahrzeugkarosserie angebrachten Spiegelersatzsystem-Kamera fällt die Möglichkeit dieser gezielten Umströmungsbeeinflussung um das Fahrzeug weg.

Andererseits ist es bei Vorsehen von abstehenden Halterungen für ein Kamera-Monitor-System eines Fahrzeugs, das die Kamera und insbesondere deren Bildaufnahmeeinheit aufnimmt, zum Erreichen von optimaler Sicht und Ausrichtung der Kamera ggf. wünschenswert, diese an einem vom auf dem Fahrersitz sitzenden Fahrer nicht oder nur schlecht einsehbaren Ort am Fahrzeug anzubringen. Dies bedeutet, dass die Halterung der Bildaufnahmeeinheit ggf. bei bestimmten Fahrmanövern für den Fahrer nicht oder nur schwer sichtbar ist und somit, insbesondere dann, wenn der Befestigungsort der Kamera vom Fahrzeug weit herausragt und somit nicht mit den üblichen Umrissen des Fahrzeugs deckungsgleich ist, die Gefahr der Kollision mit der Umgebung oder anderen Verkehrsteilnehmern birgt.

Daher schlägt das Patent DE 10 2012 015 395 B3 einen Kameraarm für eine Spiegelersatzsystem-Kamera eines Kraftfahrzeugs vor, das ein erstes Gehäuseelement und ein zweites Gehäuseelement enthält. Das erste Gehäuseelement nimmt eine Bildaufnahmeeinheit der Spiegelersatzsystem-Kamera auf und das zweite Gehäuseelement ist angepasst, lagefest mit der Karosserie des Kraftfahrzeugs verbunden zu werden. Zwischen dem ersten Gehäuseelement und dem zweiten Gehäuseelement ist ein Schwenkmechanismus vorgesehen, so dass das erste Gehäuseelement relativ zum zweiten Gehäuseelement um eine Schwenkachse A schwenkbar ist. So bietet der Kameraarm der DE 10 2012 015 395 B3 die Möglichkeit, die Kamera derart bzgl. des Fahrzeugs zu positionieren, dass die gewünschten einsehbaren Bereiche zuverlässig durch die Bildaufnahmeeinheit erfasst werden können, und die Kamera bei Kollisionen des Kameraarms mit einem Hindernis in der Fahrzeugumgebung zu schützen, indem er sich einklappt.

Jedoch kann es, insbesondere bei solchen mehrteiligen Kameraarmen, vorkommen, dass die Kamera - z.B. durch Kollision des Kameraarms mit einem Objekt in der Fahrzeugumgebung oder durch Fremdeinwirkung (Verstellung des Kameraarms durch Dritte) - derart bzgl. des Fahrzeugs positioniert ist, dass ein oder mehrere fest definierte Erfassungsbereiche (wie beispielsweise die erwähnten gesetzlich vorgeschriebenen Sichtfelder II und IV oder ein oder mehrere individuell definierte Sichtbereiche) nicht mehr vollständig angezeigt werden. Handelt es sich dabei lediglich um eine kleine Abweichung zwischen den anzuzeigenden Erfassungsbereichen und den tatsächlich angezeigten Erfassungsbereichen, kann es vorkommen, dass der Fahrzeugführer, insbesondere wenn der Fahrzeugführer mit dem Fahrzeug nicht näher vertraut ist, diese Abweichung nicht bemerkt. Damit kann er mögliche Gefahrensituationen, die durch die Abweichung zwischen den anzuzeigenden Erfassungsbereichen und den tatsächlich angezeigten Erfassungsbereichen nur unzureichend oder gar nicht erfasst werden, zu spät oder gar nicht erkennen, was zu einer erhöhten Kollisionsgefahr des Fahrzeugs mit anderen Verkehrsteilnehmern oder Objekten in der Fahrzeugumgebung führt.

Ein einklappbarer Außenspiegel ist darüber hinaus aus der WO 00/47447 A1 bekannt. Die DE 10 2012 003 561 A1 und die DE 10 2014 111 068 A1 offenbaren einklappbare Außenspiegel jeweils mit Kamera. Die DE 10 2014 006 961 A1 offenbart eine einfahrbare Kamera als Ersatz für einen Außenspiegel. Eine Rückblickelement-Klappvorrichtung ist aus der DE 20 2015 106 118 U1, bekannt. Eine Vorrichtung zur Positionsbestimmung ist aus der EP 3 178 701 A1 bekannt. Eine Schwenkeinrichtung ist aus der DE 10 2016 102 508 A1 bekannt.

Die DE 10 2013 217081 A1 offenbart ein Verfahren zur Positionserkennung eines relativ zu einem ersten Teil eines Fortbewegungsmittels über eine vordefinierte Kinematik beweglichen zweiten Teils des Fortbewegungsmittels.

Davon ausgehend ist es Aufgabe der Erfindung eine Halterung für eine Spiegelersatzsystem-Kamera eines Kraftfahrzeugs bereitzustellen, die es einem Fahrzeugführer ermöglicht, eine Abweichung zwischen einem fest definierten, anzuzeigenden Erfassungsbereich und einem tatsächlich angezeigten Erfassungsbereich zu erkennen.

Diese Aufgabe wird mit einer Haltevorrichtung für eine Kamera zur Verwendung an einem Kraftfahrzeug, insbesondere einem Nutzfahrzeug, mit den Merkmalen des Anspruchs 1 und einem Kamera-Monitor-System nach Anspruch 13 gelöst. Bevorzugte Ausführungsformen sind in den abhängigen Ansprüchen angegeben.

Der Erfindung liegt der Gedanke zugrunde, eine Haltevorrichtung für eine Bilderfassungseinheit, insbesondere eine Kamera zur Verwendung an einem Fahrzeug zu schaffen, die eine Überwachung dahingehend ermöglicht, ob sich die Haltevorrichtung in einer Betriebsstellung befindet oder nicht. Dabei enthält die Haltevorrichtung ein erstes und ein zweites Element, die zueinander relativ beweglich sind, wobei das erste Element mit dem Fahrzeug fest verbindbar ist. In der Betriebsstellung bilden das erste und das zweite Element einen vorzugsweise langgestreckten, weit von der Befestigungsposition am Fahrzeug auskragenden Kameraarm, wobei weiter vorzugsweise in dessen fahrzeugfernem Ende die Bilderfassungseinheit angeordnet ist. Die Bilderfassungseinheit ist am zweiten Element orts- und lagefest vorgesehen. Die Betriebsstellung ist hierbei eine Stellung der Haltevorrichtung, insbesondere des ersten Elements relativ zu dem zweiten Element, die das Erfassen eines fest definierten Erfassungsbereichs der Bilderfassungseinheit, insbesondere der Kamera, ermöglicht. Der fest definierte Erfassungsbereich kann ein individuell fest gelegter Erfassungsbereich sein oder kann (gesetzlich) vorgeschriebenen Erfassungsbereichen, wie beispielsweise Sichtfeldern, wie sie in der ECE R46 definiert sind (z.B. die Sichtfelder II und IV) entsprechen. Um dem Fahrzeugführer anzeigen zu können, dass ihm der fest definierte Erfassungsbereich angezeigt wird oder nicht angezeigt wird, wird die Betriebsstellung der Haltevorrichtung, also insbesondere des ersten Elements relativ zu dem zweiten Element, permanent mittels einer Signaleinheit überwacht. So kann dem Fahrzeugführer bei Vorliegen und/oder Nicht-Vorliegen der Betriebsstellung ein Signal ausgegeben werden, anhand dessen er erkennt, ob er den gewünschten Erfassungsbereich sieht oder nicht. Wenn der Fahrzeugführer aufgrund des an ihn ausgegebenen Signals erkennt, dass er den gewünschten Erfassungsbereich nicht mehr oder wenigstens nicht mehr vollständig sieht, kann er entsprechend reagieren - entweder dadurch, dass er den Erfassungsbereich neu einstellt oder, sollte ihm das nicht möglich sein, dadurch, dass er die Fahrt alsbald beendet, um eine Gefahrensituation zu vermeiden.

Durch solch eine Haltevorrichtung kann der Fahrzeugführer schnell und zuverlässig erkennen, ob sich die Haltevorrichtung in der Betriebsstellung befindet oder nicht. Z.B. kann sich die Haltevorrichtung nach einer Kollision mit einem Hindernis in der Fahrzeugumgebung oder durch Verstellen von Hand durch Dritte (beispielsweise widerrechtlich, wenn das Fahrzeug geparkt und unbeaufsichtigt ist) nicht in der Betriebsstellung befinden. Oder die Haltevorrichtung wird zum Parken oder für die Waschstraße eingeklappt und befindet sich deshalb außerhalb der Betriebsposition. Der Fahrzeugführer erkennt dann (z.B. bei Anlassen des Fahrzeugs) sicher durch einen entsprechenden Hinweis (Signal), dass sich die Haltevorrichtung nicht in Betriebsstellung befindet und kann diese einstellen, bevor er losfährt.

Die Stellung des ersten Elements zu dem zweiten Element umfasst eine Betriebsstellung, in der die Bilderfassungseinheit einen definierten Erfassungsbereich erfasst. Zusätzlich wäre es auch denkbar, dass die Stellung des ersten Elements zu dem zweiten Element eine weitere Stellung umfasst, wie beispielsweise eine Einklapp-/Abklappstellung, in der das zweite Element gegenüber dem ersten Element vollständig eingeklappt bzw. abgeklappt ist. Die Festlegung weiterer Stellungen der Haltevorrichtung hat den Vorteil, dass nicht nur überwacht werden kann, ob die Betriebsstellung eingehalten wird, sondern auch ob weitere Stellungen, die im Straßenverkehr ggf. gesetzlich gefordert sind, erreicht sind (wie das Einklappen der Außenspiegel bei Anbringungspositionen kleiner oder gleich zwei Metern über der Fahrbahn).

Die Signaleinrichtung gibt ein Signal aus, wenn sich das erste Element und das zweite Element in der Betriebsstellung befinden. So wird dem Fahrer zweifelsfrei angezeigt, dass die fest definierte Betriebsstellung dem angezeigten bzw. dem sichtbaren Erfassungsbereich entspricht.

Alternativ oder zusätzlich gibt die Signaleinrichtung ein Signal aus, wenn sich das erste Element und das zweite Element nicht in der Betriebsstellung befinden, was dem Fahrer anzeigt, dass sich die Haltevorrichtung nicht mehr in der Betriebsstellung befindet und er umgehend reagieren muss.

Ferner gibt die Signaleinrichtung das Signal bei einer fest definierten Stellung zwischen dem ersten Element und dem zweiten Element aus, die wenigstens einen fest definierten Bewegungsbereich zwischen einer Position des ersten Elements zu einer Position des zweiten Elements aufweist. Unter einem fest definierten Bewegungsbereich ist ein Bereich zu verstehen, innerhalb dessen sich das zweite Element relativ zu dem ersten Element bewegen kann, ohne dass ein Signal ausgegeben wird oder bei dem stets ein Signal ausgegeben wird. D.h. der fest definierte Bewegungsbereich ist ein Bereich, der durch zwei Stellungen des zweiten Elements relativ zu dem zweiten Element gekennzeichnet ist, bei denen der fest definierte Erfassungsbereich noch angezeigt wird und folglich kein Signal an den Fahrzeugführer ausgegeben werden muss oder das Signal an den Fahrzeugführer aufrecht erhalten wird. Sobald das zweite Element jedoch den fest definierten Bewegungsbereich verlässt, d.h. sich über eine der beiden Stellungen, bei denen der fest definierte Erfassungsbereich noch angezeigt wird, hinaus bewegt, wird ein Signal ausgegeben oder das Signal wird nicht länger ausgegeben. Die Ausgabe des Signals kann akustisch (Warnton), optisch (Overlay im Monitor oder

Warnleuchte im Armaturenbrett), etc. erfolgen. Der fest definierte Bewegungsbereich muss somit nicht notwendigerweise den Betriebsbereich umfassen, sondern kann auch jeden anderen Bereich, z.B. einen Bereich zum Einklappen des zweiten Elements, umfassen. Alternativ oder zusätzlich kann es möglich sein, dass das Fahrzeug nicht bewegt werden kann, solange sich die Haltevorrichtung nicht in Betriebsstellung befindet.

Nach einer bevorzugten Ausführungsform sind die Signaleinrichtung im ersten Element und der Signalgeber im zweiten Element angeordnet. Alternativ sind die Signaleinrichtung im zweiten Element und der Signalgeber im ersten Element angeordnet. Die Wahl, wo die Signaleinrichtung und der Signalgeber angeordnet sind, erfolgt abhängig davon, wie die Signaleinheit aufgebaut ist und wo die Verarbeitungseinheit auf der Haltevorrichtung angeordnet ist, um eine möglichst einfache und zugleich zuverlässige Daten-/Informationsübertragung von der Signaleinheit zu der Verarbeitungsvorrichtung zu gewährleisten. So ist es beispielweise von Vorteil die Signaleinrichtung auf dem gleichen Element der Haltevorrichtung anzuordnen, auf dem sich auch die Verarbeitungseinheit befindet, bzw. auf dem ersten Element, das ortsfest zum Fahrzeug ist, so dass keine mechanischen Belastungen für die elektrische Verbindung entstehen.

Die Signaleinrichtung kann ein mechanisch betätigter Schalter und/oder ein Mikroschalter sein. Alternativ kann die Signaleinrichtung ein berührungslos zu betätigender Sensor sein, wie beispielsweise ein Hallsensor, Readsensor oder ein optischer Sensor (z.B. ein Laser).

Der Lagermechanismus zwischen dem ersten Element und dem zweiten Element ist vorzugsweise ein Schwenkmechanismus mit einer Drehachse, die in einem am Fahrzeug montierten Zustand in der Höhenrichtung des Fahrzeugs verläuft. Mit anderen Worten kann der Lagermechanismus derart ausgebildet sein, dass er eine Schwenk- bzw. Drehbewegung zwischen dem ersten Element und dem zweiten Element, z.B. um einen Lagerzapfen, zulässt. Dies ermöglicht, dass das zweite Element relativ zum ersten Element einklappbar und somit die Längserstreckung der Haltevorrichtung im Vergleich zum ausgeklappten Zustand verringert wird.

Alternativ kann der Lagermechanismus ein Schiebemechanismus sein, der ein Bewegen des zweiten Elements relativ zu dem zweiten Element senkrecht zu der Längsachse des Fahrzeugs ermöglicht, beispielsweise über Gleitstücke.

Die Bewegung des ersten Elements relativ zu dem zweiten Element erfolgt vorzugsweise über einen Motor, der entweder in der Haltevorrichtung selbst oder in dem Fahrzeug angeordnet ist und über die Verarbeitungseinheit der Haltevorrichtung, der Steuereinheit des Fahrzeugs oder eine separate Steuereinheit angesteuert wird. Alternativ kann auch eine Verstellung des zweiten Elements zu dem ersten Element per Hand erfolgen.

Vorzugsweise weist die Haltevorrichtung ferner eine Rasteinrichtung auf, die wenigstens eine Raststellung aufweist. Die Raststellung entspricht der Betriebsstellung. Die Rasteinrichtung weist an dem ersten Element und dem zweiten Element Zähne (Vorsprünge bzw. Nuten) für einen Formschluss zwischen dem ersten Element und dem zweiten Element und eine Feder auf, die das zweite Element in das erste Element drückt. Alternativ zu einer Rasteinrichtung kann der Lagermechanismus ein Friktionslager aufweisen. Die Einstellung der Betriebsstellung ist jedoch mittels einer Rasteinrichtung zuverlässiger zu bewerkstelligen. Vorzugsweise weist der Lagermechanismus eine Sollbruchstelle auf. So kann sich die Haltevorrichtung bei einer starken Kollision mit einem Hindernis in der Fahrzeugumgebung, d.h. wenn ein bloßes Einklappen des zweiten Elements nicht ausreicht, kontrolliert an der Lagerstelle brechen, ohne dass die Fahrzeugkarosserie beschädigt wird.

Vorzugsweise weist der Signalgeber eine geometrische Form auf, durch die die Signaleinrichtung betätigt wird. So erfolgt eine mechanische Betätigung der Signaleinrichtung, was eine zuverlässige Form der Signalerzeugung ist.

Dabei weist die geometrische Form vorzugsweise wenigstens einen Vorsprung in Richtung der Drehachse des Schwenkmechanismus auf und ist radial um die Drehachse herum angeordnet. Beispielsweise kann der Signalgeber die Form einer Nocke oder einer Nut aufweisen.

Um Bauraum zu sparen, kann die geometrische Form, d.h. der Vorsprung oder die Nut, in die Rasteinrichtung integriert sein. Alternativ kann die geometrische Form auch nur in räumlicher Nähe zu der Rasteinrichtung angeordnet sein.

Alternativ kann der Signalgeber ein Magnetfeld oder ein induktives Feld erzeugen, durch das die Signaleinrichtung betätigt wird. Dadurch wird eine empfindliche Signaleinheit geschaffen, durch die ein sehr genaues Signal erzeugt werden kann.

Bevorzugter Weise weist die Haltevorrichtung ferner eine Verarbeitungseinheit auf, die angepasst ist, die Bilddaten der Bilderfassungseinheit, zu verarbeiten. Zudem kann die Verarbeitungseinheit auch dazu angepasst sein, die Informationen der Signaleinrichtung zu verarbeiten. Weiter kann die Verarbeitungseinheit auch angepasst die Signaleinheit und/oder die Bilderfassungseinheit zu steuern, was den Vorteil hat, dass die Anzahl an für den Betrieb der Haltevorrichtung erforderlichen Bauteile reduziert werden kann. Alternativ kann auch eine weitere Verarbeitungseinheit vorgesehen sein, die angepasst ist, die Informationen der Signaleinrichtung zu verarbeiten. Als eine Verarbeitungseinheit kann eine vorhandene Steuereinheit (electronic control unit, ECU) des Fahrzeugs, eine ECU im Monitor, eine ECU in der Aufnahmeeinheit oder eine zusätzliche ECU dienen.

Die Verarbeitungseinheit ist in dem ersten Element und/oder dem zweiten Element und/oder dem Fahrzeug angeordnet.

Vorzugsweise ist die Bilderfassungseinheit eine Kameraeinrichtung (z.B. mit CMOS- und CCD-Technologie) und/oder eine Sensoreinrichtung, wie beispielsweise eine Sensoreinrichtung, die mittels mit Ultraschall, Radar, etc. Objekte in der Fahrzeugumgebung detektiert.

Vorteilhafter Weise ist die Bilderfassungseinheit angepasst und sind das erste und zweite Element der Haltevorrichtung so am Fahrzeug angeordnet und befestigt, dass die Bilderfassungseinheit in der Betriebsstellung wenigstens ein gesetzlich vorgeschriebenes Sichtfeld erfasst, wie beispielsweise die in der UN-Regelung ECE R46 definierten Sichtfelder II und IV.

Vorzugsweise werden die von der Erfassungseinheit erfassten Bilddaten auf einer Wiedergabeeinheit wiedergegeben. Dazu eignet sich beispielsweise eine Wiedergabeeinheit (z.B. Monitor), die im Inneren des Fahrzeugs, z.B. in der Fahrerkabine links oder rechts an der A-Säule oder mittig dazwischen, angeordnet ist.

Nach einer bevorzugten Ausführungsform wird die Signaleinrichtung von dem Signalgeber bei einem Schaltwinkel betätigt, der kleiner als ein Ausrastwinkel ist, bei dem das zweite Element die Betriebsstellung verlässt. Der Schaltwinkel ist der Winkel, um den das zweite Element relativ zu dem ersten Element verdreht ist, wenn die Signaleinrichtung geschaltet wird. Der Schaltwinkel ist kleiner als der Ausrastwinkel.

Im Falle einer mechanischen Betätigung der Signaleinrichtung durch einen Signalgeber mit einer vorbestimmten geometrischen Form bedeutet das, dass die Signaleinrichtung beginnt, sich relativ zu dem Signalgeber zu bewegen, oder der Signalgeber beginnt, sich relativ zu der Signaleinrichtung zu bewegen, bevor der Ausrastwinkel erreicht ist, wenn sich die Haltevorrichtung aus der Betriebsstellung heraus bewegt (d.h. ausrastet). Die Signaleinrichtung wird somit bereits vor Erreichen des Ausrastwinkels geschaltet.

Andersherum, wenn sich die Haltevorrichtung aus der Nicht-Betriebsstellung in die Betriebsstellung bewegt (d.h. einrastet), beginnt die Signaleinrichtung, sich relativ zu dem Signalgeber zu bewegen, oder der Signalgeber beginnt, sich relativ zu der Signaleinrichtung zu bewegen, bevor die Betriebsstellung erreicht ist. Die Signaleinrichtung wird somit bereits vor Erreichen der Betriebsstellung geschaltet.

So wird in der Betriebsstellung und/oder der Nicht-Betriebsstellung sicher ein Signal erzeugt oder kein Signal erzeugt, was dem Fahrzeugführer zuverlässig angibt, ob sich die Haltevorrichtung noch in Betriebsstellung befindet oder nicht.

Ein Kamera-Monitor-System für ein Fahrzeug enthält eine Haltevorrichtung wie oben beschreiben, und eine Wiedergabeeinheit, die im Inneren des Fahrzeugs derart angebracht ist, dass sie von einem Fahrer einsehbar ist.

Nachfolgend wird die Erfindung beispielhaft anhand der beigefügten Figuren beschrieben, in denen:
- Fig. 1: eine schematische Ansicht zweier Kamera-Monitor-Systeme ist;
- Fig. 2a: eine Draufsicht auf ein Fahrzeug ist, dessen Einrichtung zur indirekten Sicht sich in Betriebsstellung befindet;
- Fig. 2b: eine Draufsicht auf ein Fahrzeug ist, dessen Einrichtung zur indirekten Sicht sich teilweise außerhalb der Betriebsstellung befindet;
- Fig. 3a: eine Ansicht in einer Einrichtung zur indirekten Sicht ist, die sich in Betriebsstellung befindet;
- Fig. 3b: eine Ansicht in einer Einrichtung zur indirekten Sicht ist, die sich teilweise außerhalb der Betriebsstellung befindet;
- Fig. 4: eine schematische Seitenansicht einer erfindungsgemäßen Haltevorrichtung;
- Fig. 5: eine weitere Ausführungsform einer erfindungsgemäßen Haltevorrichtung zeigt;
- Fig. 6: eine perspektivische Ansicht sowie Schnittansichten einer Rastvorrichtung in unterschiedlichen Stellungen zeigt;
- Fig. 7: eine perspektivische Ansicht eines ersten Elements der erfindungsgemäßen Haltevorrichtung aus Fig. 4 mit einer Signaleinrichtung in Betriebsstellung zeigt;
- Fig. 8: eine perspektivische Ansicht eines ersten Elements der erfindungsgemäßen Haltevorrichtung aus Fig. 4 mit einer Signaleinrichtung außerhalb der Betriebsstellung zeigt;
- Fig. 9: eine Diagramm ist, das schematische eine Überlagerung einer Ausrastbewegung eines zweiten Elements der erfindungsgemäßen Haltevorrichtung und eines Signalverlaufs einer Signaleinrichtung zeigt; und
- Fig. 10: eine perspektivische Ansicht eines ersten Elements und eines zweiten Elements der erfindungsgemäßen Haltevorrichtung aus Fig. 4 mit einer Signaleinrichtung in Betriebsstellung zeigt.

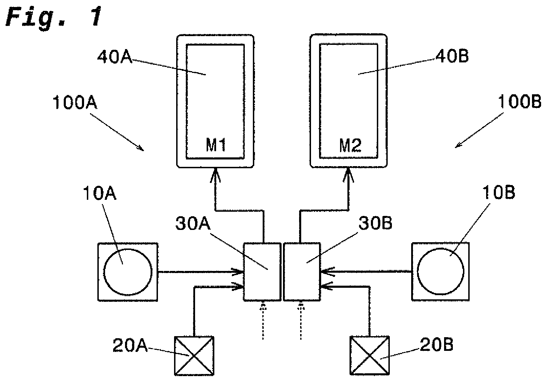

Fig. 1 zeigt eine schematische Ansicht zweier Kamer-Monitor-Systeme 100A, 100B eines Fahrzeugs, insbesondere eines Nutzfahrzeugs. Das Kamera-Monitor-System 100A kann an der linken Karosserieseite eines Fahrzeugs montiert sein, das Kamera-Monitor-System 100A kann an der rechten Karosserieseite eines Fahrzeugs montiert sein. Jedes Kamera-Monitor-System 100A, 100B weist eine Bilderfassungseinheit 10A, 10B, eine Signaleinheit 20A, 20B, eine Verarbeitungseinheit 30A, 30B und eine Wiedergabeeinheit 40A, 40B auf. Die Bilderfassungseinheit 10A, 10B ist angepasst, Bilddaten einer Umgebung um das Fahrzeug herum auf entweder einer linken oder einer rechten Seiten zu erfassen und diese Bilddaten an die jeweilige Verarbeitungseinheit 30A, 30B weiter zu leiten. Die Signaleinheit 20A, 20B ist angepasst, Signale zu erzeugen und diese Signale an die jeweilige Verarbeitungseinheit 30A, 30B weiter zu leiten. Es ist denkbar, weitere Baugruppen an die Verarbeitungseinheit 30A, 30B anzuschließen, die weitere Eingangsgrößen an die jeweilige Verarbeitungseinheit 30A, 30B weiterleiten (siehe gestrichelte Pfeile in Fig. 1). Die Verarbeitungseinheit 30A, 30B steuert die Bilderfassungseinheit 10A, 10B und die Signaleinheit 20A, 20B und verarbeitet die von der Bilderfassungseinheit 10A, 10B und der Signaleinheit 20A, 20B zugeführten Bilddaten bzw. Informationen und leitet die verarbeiteten Bilddaten bzw. Informationen an die Wiedergabeeinheit 40A, 40B (z.B. einen Monitor) weiter. Die Verarbeitungseinheit 30A, 30B ist vorliegend eine elektronische Steuereinheit (ECU), die zusätzlich zu der im Fahrzeug vorgesehenen ECU vorhanden ist.

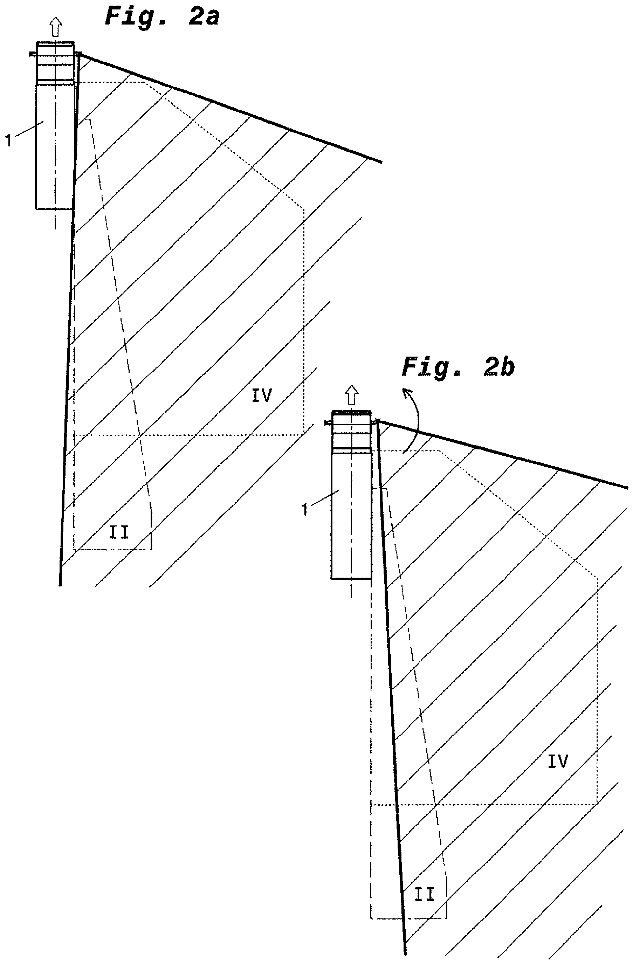

Fig. 2a und 2b sind Draufsichten auf ein Fahrzeug 1. Vorliegend ist das Fahrzeug 1 ein Nutzfahrzeug, genauer ein Lastkraftwagen, der eine Geradeausfahrt durchführt (siehe Pfeil an Fahrerkabine). Das Fahrzeug 1 weist links und rechts an der Fahrerkabinenaußenwand eine Einrichtung zur indirekten Sicht auf. Die Einrichtung zur indirekten Sicht erfasst einen Sichtbereich (schraffiert dargestellt in Fig. 2a und 2b), der zwei gesetzlich vorgeschriebene Sichtfelder enthält, das Sichtfeld II eines Hauptspiegels und das Sichtfeld IV eines Weitwinkelspiegels, wie sie in der ECE R46 definiert sind. In Fig. 2a ist die Einrichtung zur indirekten Sicht derart eingestellt, dass sie die Sichtfelder II und IV vollständig erfasst und der Fahrzeugführer die Sichtfelder II und IV entsprechend vollständig einsehen kann. Die Einrichtung zur indirekten Sicht befindet sich somit in Betriebsstellung. In Fig. 2b ist die Einrichtung zur indirekten Sicht gegenüber der Betriebsstellung verstellt, so dass die Einrichtung zur indirekten Sicht die Sichtfelder II und IV lediglich teilweise anzeigt. Die Einrichtung zur indirekten Sicht befindet sich somit nicht mehr in Betriebsstellung.

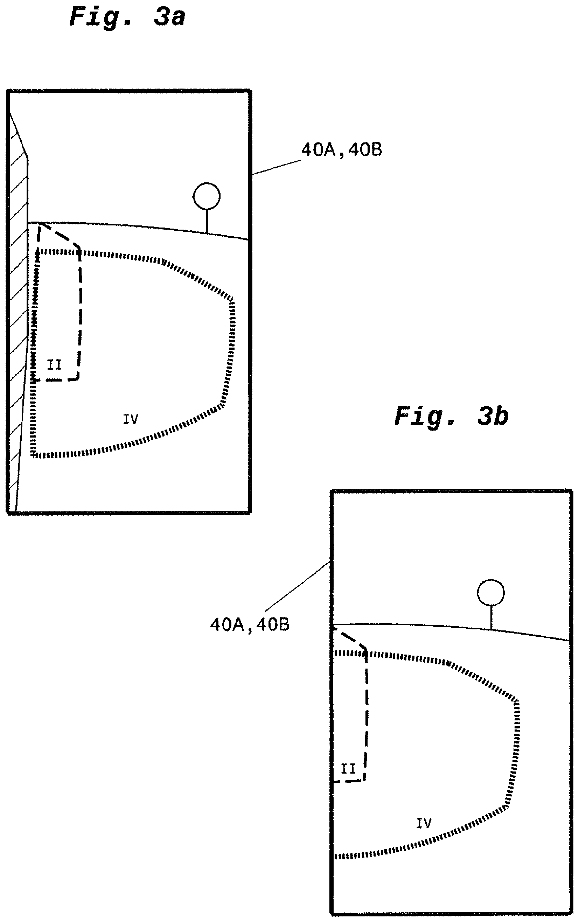

In Fig. 3a und 3b sind die Ansichten einer Fahrzeugumgebung gezeigt, die die Einrichtung zur indirekten Sicht entsprechend den Stellungen der Einrichtung zur indirekten Sicht aus Fig. 2a und 2b zeigt. Vorliegend sind die Ansichten der Fahrzeugumgebung auf den Wiedergabeeinheiten 40A, 40B abgebildet. Wie Fig. 3a zu entnehmen ist, sind die Sichtfelder II und IV sowie ein Teil der Fahrzeugseitenwand auf der Wiedergabeeinheit 40A, 40B zu sehen. Die Stellung der Bilderfassungseinheit entspricht somit der Betriebsstellung. Fig. 3b hingegen zeigt unvollständige Sichtfelder II und IV und keine Fahrzeugseitenwand auf der Wiedergabeeinheit 40A, 40B. Die Stellung der Bilderfassungseinheit entspricht somit der nicht Betriebsstellung.

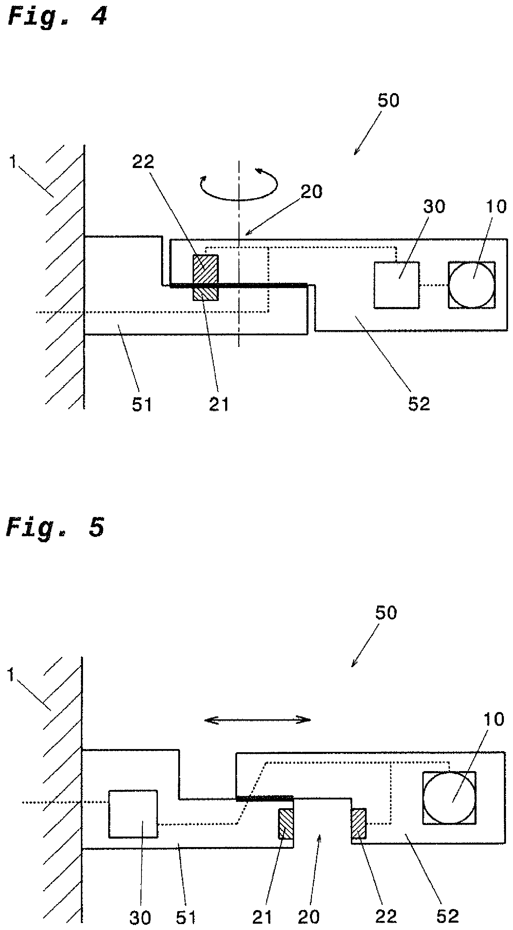

Fig. 4 zeigt eine schematische Seitenansicht einer erfindungsgemäßen Haltevorrichtung 50. Die Haltevorrichtung 50 entspricht vorliegend einem langgestreckten Kameraarm, der von der Karosserie des Fahrzeugs 1 vorsteht, bevorzugt jeweils einer auf einer linken und rechten Außenseite der Fahrerkabine. Die Haltevorrichtung 50 weist ein erstes Element 51 und ein zweites Element 52 auf. Das erste Element 51 ist fest bzw. starr an der Außenwand des Fahrzeugs 1 angebracht. Das erste Element 51 weist eine gestufte Form auf. Das zweite Element 52 weist eine zu der gestuften Form des ersten Elements 51 umgekehrt gestufte Form auf und ist gelenkig mit dem ersten Element 51 verbunden. Das zweite Element 52 weist die Bilderfassungseinheit 10 und die Verarbeitungsvorrichtung 30 auf. Ferner weist die Haltevorrichtung 50 eine Signaleinheit 20 auf. Die Signaleinheit 20 besteht aus einem Signalgeber 21 und einer Signaleinrichtung 22. Der Signalgeber 21 ist auf dem ersten Element 51 angeordnet, während die Signaleinrichtung 22 auf dem zweiten Element 52 angeordnet ist. Die in Fig. 4 gezeigte Haltevorrichtung 50 weist einen Schwenkmechanismus auf (siehe Pfeil in Fig. 4). D.h. das zweite Element 52 ist relativ zu dem ersten Element 51 drehbar gelagert. Der Signalgeber 21 und die Signaleinrichtung 22 sind in Richtung der Drehachse des Schwenkmechanismus zueinander ausgerichtet. Die Leitungsbahnen zum Leiten der Bilddaten der Bilderfassungseinheit 10 und der Informationen der Signaleinheit 20 verlaufen durch eine Drehdurchführung (nicht gezeigt) von dem zweiten Element 52 zu dem ersten Element 51.

Fig. 5 zeigt eine alternative Ausführungsform einer erfindungsgemäßen Haltevorrichtung 50. Die in Fig. 5 gezeigte Haltevorrichtung unterscheidet sich von der in Fig. 4 gezeigten Haltevorrichtung dadurch, dass sie keinen Schwenkmechanismus, sondern einen Schiebemechanismus aufweist. D.h. das zweite Element 52 ist bezüglich des ersten Elements 51 verschiebbar, gleitbar ausgebildet (siehe Pfeil in Fig. 5). Bei der in Fig. 5 gezeigten Haltevorrichtung 50 befindet sich die Bilderfassungseinheit 10 auf dem zweiten Element 52, während sich die Verarbeitungseinheit 30 auf dem ersten Element 51 befindet. Der Signalgeber 21 und die Signaleinrichtung 22 sind in Schieberichtung des Schiebemechanismus zueinander ausgerichtet.

Die Signaleinrichtung 22 und der Signalgeber 21 in Fig. 4 und 5 können jeweils entweder auf dem festem ersten Element 51 oder dem beweglichem zweiten Element 52 der Haltevorrichtung 50 angeordnet sein.

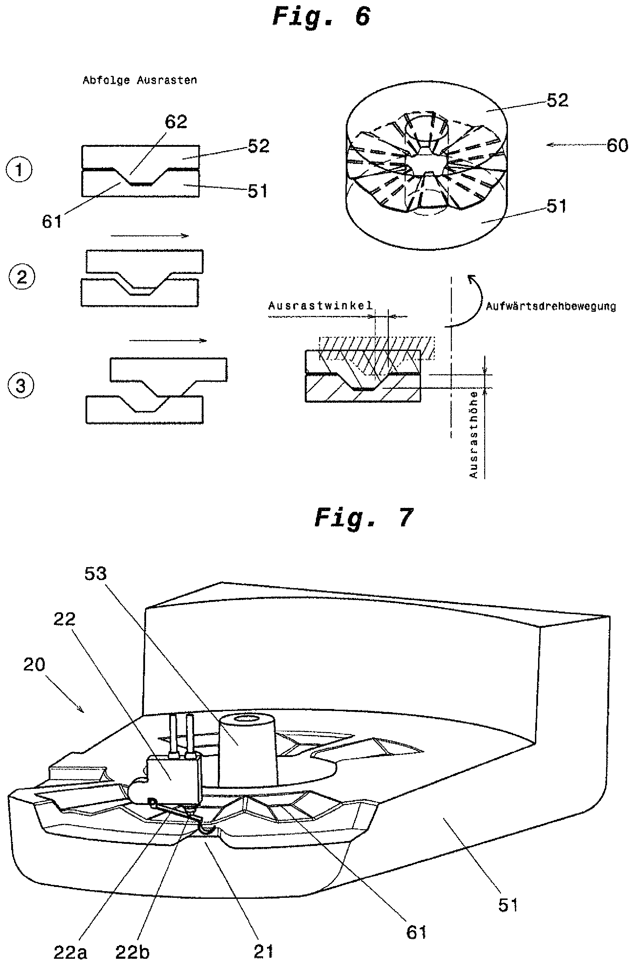

Fig. 6 zeigt eine Rastvorrichtung 60, wie sie in einer Haltevorrichtung 50 mit Schwenkmechanismus vorgesehen ist. Die Rastvorrichtung 60 besteht aus einer ersten Raste 61, die an dem ersten Element 51 ausgebildet ist, und einer zweiten Raste 62, die an dem zweiten Element 52 ausgebildet ist. Die erste bzw. zweite Raste 61, 62 weisen wenigstens eine Vertiefung bzw. ein Vorsprung in dem jeweiligen ersten oder zweiten Element 51, 52 auf, die derart ausgebildet sind, dass ihre Formen einander entsprechen und sie einen Formschluss bilden, wenn sie ineinander eingreifen. Im vorliegenden Fall weisen die Rasten 61, 62 mehrere Zähne auf, die die Form eines abgeflachten Dreiecks mit an beiden Seiten angrenzenden waagrecht verlaufenden Flächen haben. Dabei weist die erste Raste 61 mehrere Nuten auf, die in das erste Element 51 eingebracht ist und jeweils zwei zueinander entgegengesetzt schräg verlaufende Flächen aufweisen, die derart zu einer waagrechten Fläche laufen, dass sich der Querschnitt der jeweiligen Nut bis zum Erreichen der waagrechten Fläche kontinuierlich verjüngt. Die zweite Raste 62 hingegen weist mehrere Vorsprünge auf, die von dem zweiten Element 52 hervorstehen und jeweils zwei zueinander entgegengesetzt schräg verlaufende Flächen aufweisen, die derart von einer waagrechten Fläche weg laufen, dass sich der Querschnitt des Vorsprungs von der waagrechten Fläche kontinuierlich vergrößert. Wie in der perspektivischen Ansicht in Fig. 6 gezeigt, können mehrere Nuten/Vorsprünge (Zähne) radial um die Drehachse des Schwenkmechanismus herum angeordnet sein, die dann verschiedenen Betriebs- und Nicht-Betriebsstellungen entsprechen.

In den Schritten 1 bis 3 in Fig. 6 ist das Ausrasten des zweiten Elements 52 aus dem ersten Element 51 gezeigt. Bei Schritt 1 befinden sich die beiden Elemente 51, 52 durch formschlüssiges Ineinandergreifen der Rasten 61, 62 in einem eingerasteten Zustand. Eine Feder (nicht gezeigt) drückt die zweite Raste 62 des zweiten Elements 52 in die erste Raste 61 des ersten Elements 51. Bei Schritt 2 wird das erste Element 51 relativ zu dem zweiten Element 52 bewegt, beispielsweise linear verschoben oder verdreht (siehe Pfeil nach rechts in Fig. 6). Dadurch löst sich die formschlüssige Verbindung zwischen dem ersten Element 51 und dem zweiten Element 52. Eine solche Verdrehung bzw. Verschiebung kann durch einen Motor erfolgen, der in dem Fahrzeug oder der Haltevorrichtung vorgesehen ist, erfolgt üblicherweise aber mechanisch, wie beispielsweise per Hand, z.B. durch den Fahrzeugführer. Solange die Kraft, die zur Bewegung des zweiten Elements 52 gegenüber dem ersten Element 51 erforderlich ist, jedoch die Federkraft unterschreitet, die die zweite Raste 62 in die erste Raste 61 drückt, erfolgt kein vollständiges Ausrasten des zweiten Elements 52 aus dem ersten Element 51, sondern lediglich eine Bewegung der zweiten Raste 62 entlang der schrägen Flächen der ersten Raste 61, ohne die schräge Fläche der ersten Raste 61 zu verlassen bzw. sich darüber hinaus zu bewegen. Mit anderen Worten wird sich das zweite Element 52 wieder in die erste Raste 61 des ersten Elements 51 hineinbewegen, sobald der Motor die beiden Elemente 51 und 51 nicht länger relativ zu einander bewegt. Bei Schritt 3 schließlich übersteigt die Kraft, die der Motor auf das zweite Element 52 aufbringt, die Kraft der Feder, die das zweite Element 52 nach unten in die erste Raste 61 drückt. Die zweite Raste 62 bewegt sich somit über die schräge Fläche der ersten Raste 61 hinaus und verlässt diese. Dieser Vorgang wird als Ausrasten bezeichnet.

In Fig. 6 ist ferner eine Schnittzeichnung des ersten Elements 51 und des zweiten Elements 52 abgebildet, anhand der die Begriffe "Ausrastwinkel" und "Ausrasthöhe" definiert werden. Der Ausrastwinkel ist der Winkel, um den das zweite Element 52 gegenüber dem ersten Element 51 verdreht wird, so dass das zweite Element 52 aus dem ersten Element 51 ausrastet. Wird der Ausrastwinkel erreicht, so übersteigt die Kraft, die die der Motor auf das zweite Element 52 aufbringt, die Kraft der Feder, die das zweite Element 52 nach unten in die erste Raste 61 drückt, und das zweite Element 52 rastet aus dem ersten Element 51 aus. Die Strecke, die das zweite Element 52 beim Ausrasten relativ zu dem ersten Element 51 senkrechte zur Bewegungsrichtung zurücklegt, wird als die Ausrasthöhe bezeichnet, d.h. die Höhe, die erforderlich ist, dass sich der waagerechte Teil der zweiten Raste 62 des zweiten Elements 52 an der schrägen Fläche der ersten Raste 61 des ersten Elements 51 derart entlang bewegt, dass es die schräge Fläche der ersten Raste 61 gerade verlässt.

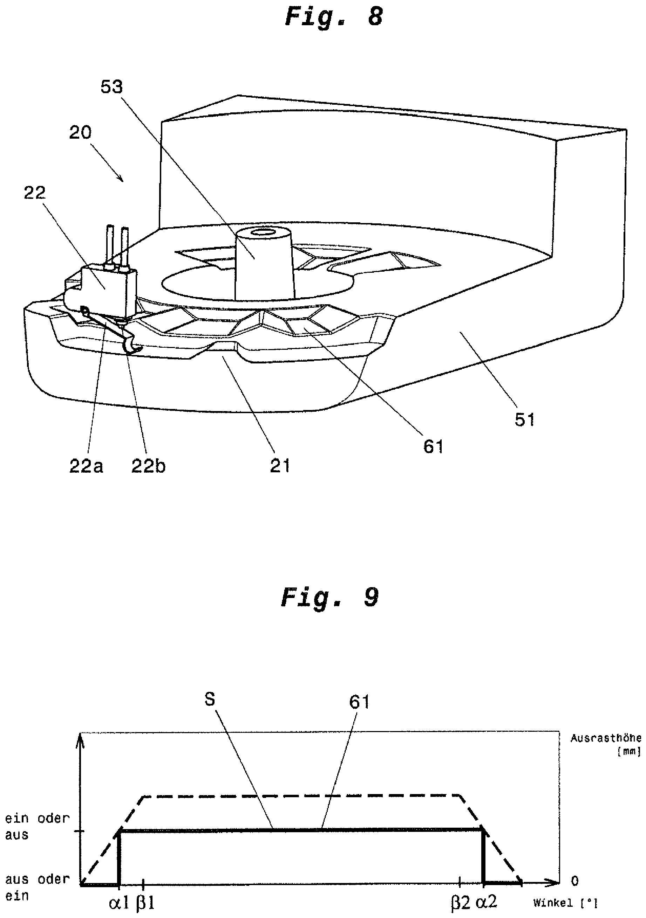

In Fig. 7 ist eine perspektivische Ansicht eines ersten Elements 51 der erfindungsgemäßen Haltevorrichtung 50 aus Fig. 4 mit einer Signaleinheit 20 in Betriebsstellung zeigt. Die Signaleinheit 20 weist die Signaleinrichtung 22 und den Signalgeber 21 auf. Die Signaleinrichtung 22 hat einen mechanischen Schalter 22b, der über einen elastischen Arm 22a betätigt wird. Der Signalgeber 21 ist in Form eines Vorsprungs, z.B. einer Nocke, ausgebildet, die auf einem Abschnitt des ersten Elements 51 um eine Drehachse 53 der Haltevorrichtung 50 herum angeordnet ist. Der Signalgeber 21 befindet sich auf dem ersten Element 51 und die Signaleinrichtung 22 ist an dem zweiten Element 52 angeordnet. Befindet sich der elastische Arm 22a der Signaleinrichtung 22 auf der Nocke, d.h. dem Signalgeber 21, drückt der elastische Arm 22a den Schalter 22b der Signaleinrichtung 22 und betätigt so die Signaleinrichtung 22. In Fig. 8 ist die Betriebssituation gezeigt, bei der sich der elastische Arm 22a der Signaleinrichtung 22 nicht auf der Nocke, d.h. dem Signalgeber 21, befindet und somit den Schalter 22b der Signaleinrichtung 22 nicht drückt. Entsprechend betätigt der Signalgeber 21 bei der in Fig. 8 gezeigten Betriebssituation die Signaleinrichtung 22 nicht.

In Fig. 7 und 8 ist ferner der in dem ersten Element 51 angeordnete Teil der Rastvorrichtung 60 gezeigt. Durch die Rastvorrichtung 60 ist es möglich, eine genaue Betriebsstellung des ersten Elements 51 relativ zu dem zweiten Element 52 festzulegen. Als Betriebsstellung wird vorliegend die Stellung des ersten Elements 51 zu dem zweiten Element 52 bezeichnet, die einen vorher festgelegten Erfassungsbereich einer Erfassungseinheit, wie beispielsweise einer Kamera, bevorzugt mit einem CMOS- oder einem CCD-Technologie, vollständig anzeigt. Ein solcher Erfassungsbereich können ein oder mehrere von dem Fahrzeugführer festgelegte Bereiche, aber auch ein oder mehrere gesetzlich vorgeschriebene Sichtfelder, wie beispielsweise die Sichtfelder II und IV der ECE R46 sein. Alternativ kann die Betriebsstellung auch durch ein Friktionslager festgelegt werden. Der Signalgeber 21, d.h. die Nocke, ist derart zu der Rastvorrichtung 60 angeordnet, dass der Signalgeber 21, wie in Fig. 7 gezeigt, durch Drücken des Schalters 22b die Signaleinrichtung 22 betätigt, solange sich die Haltevorrichtung 50 in Betriebsstellung befindet. Sobald die Betriebsstellung jedoch durch eine Bewegung des zweiten Elements 52 relativ zu dem ersten Element 51 verlassen wird, bewegt sich die Signaleinrichtung 22 weg von dem Signalgeber 21, d.h. der elastische Arm 22a der Signaleinrichtung 22 verlässt die Nocke. Dabei bewegt sich der elastische Arm 22a der Signaleinrichtung 22 entlang der Nocke nach unten in Fig. 8 und entfernt sich derart von dem Schalter 22b der Signaleinrichtung 22, dass er den Schalter 22b der Signaleinrichtung 22 nicht länger berührt. Damit betätigt der Signalgeber 21 die Signaleinrichtung 22 nicht länger. Sobald die Signaleinrichtung 22 nicht mehr betätigt wird und entsprechend auch kein Signal an die Verarbeitungseinheit 30 weitergibt, gibt die Verarbeitungseinheit 30 die Information an die Wiedergabeeinheit 40A, 40B aus, dass die Haltevorrichtung 50 die Betriebsstellung verlassen hat. Andersherum gibt die Verarbeitungseinheit 30 keine Information an die Wiedergabeeinheit 40A, 40B aus, wenn sich die Haltevorrichtung 50 in Betriebsposition befindet, oder gibt eine Information an Wiedergabeeinheit 40A, 40B aus, dass sich die Haltevorrichtung 50 in Betriebsposition befindet. Die Information der Verarbeitungseinheit 30 kann akustisch durch einen Warnton, optisch durch eine Einblendung auf der Wiedergabeeinheit, etc. an den Fahrzeugführer ausgegeben werden. Alternativ kann die Signaleinrichtung 22 auch derart ausgebildet sein, dass bei Berühren des Signalgebers 21 mit dem Arm 22a die Signaleinrichtung 22 nicht betätigt wird und bei Verlassen des Signalgebers 21 die Signaleinrichtung 22 betätigt wird.

Um Toleranzen der in die Signalerzeugung und -weitergabe eingebundenen Komponenten, d.h. des Signalgebers 21 und der Signaleinrichtung 22, zu kompensieren, wie beispielsweise Spiel im Schalter 22b der Signaleinrichtung 22, Verzug von Flächen des Signalgebers 21, etc., erfolgt das Betätigen der Signaleinrichtung 22 vorzugsweise vor Erreichen des Ausrastwinkels β₁, d.h. des Winkels, um den das zweite Element 52 gegenüber dem ersten Element 51 zu verdrehen ist, so dass das zweite Element 52 gerade aus dem ersten Element 51 ausrastet. Das Schalten der Signaleinrichtung vor Erreichen des Ausrastwinkels kompensiert Toleranzen in dem Signalgeber (wie z.B. eine Oberflächen-/Fertigungstoleranz der Nocke) und/oder in der Signaleinrichtung (wie z.B. eine Toleranz in dem Schalter 22b oder dem Arm 22a) und damit einer Toleranzkette (Verkettung einzelner Toleranzen), so dass die Signaleinrichtung 22 sicher bei Erreichen des Ausrastwinkels β₁ schaltet. Anders gesagt, würde die Schalteinrichtung 22 nicht vor Erreichen des Ausrastwinkels β₁ betätigt, würde dem Fahrzeugführer durch Toleranzen zeitverzögert, d.h. zu spät, angezeigt werden, dass sich die Haltevorrichtung 50 nicht mehr in Betriebsstellung befindet.

In Fig. 9 ist ein Diagramm abgebildet, das eine schematische Überlagerung des von dem Signalgeber 21 an die Signaleinrichtung 22 ausgegebenen Betätigungssignals S (schwarze dicke Linie) und der Ausrastbewegung des zweiten Elements 52 aus dem ersten Element 51 (siehe gestrichelte Linie) zeigt. Auf der horizontalen Achse ist der Winkel aufgetragen, um den das zweite Element 52 gegenüber dem ersten Element 51 verdreht wird. Auf der senkrechten Achse ist die Wegstrecke (Höhe) aufgetragen, die das zweite Element 52 beim Ausrastvorgang zurücklegt. Wie Fig. 9 zu entnehmen ist, entspricht die Ausrastbewegung des zweiten Elements 52 aus dem ersten Element 51 im Wesentlichen der Form der ersten Raste 61: Mit zunehmendem Verdrehwinkel bewegt sich das zweite Element 52 entlang einer schrägen Gerade solange nach oben, bis der Ausrastwinkel β₁ erreicht ist, d.h. der Verdrehwinkel, bei dem das zweite Element 52 das obere Ende der schrägen Fläche der zweiten Raste 62 erreicht hat. Wird das zweite Element 52 nun weiter gegenüber dem ersten Element 51 verdreht, bewegt sich das zweite Element 52 nicht weiter nach oben von dem ersten Element 51 weg, sondern läuft entlang einer waagerecht verlaufenden Fläche, bis nach Erreichen eines gewissen Verdrehwinkels ein weiterer Ausrastwinkel β₂ erreicht wird, ab dem sich das zweite Element 52 entlang einer schräg nach unten verlaufenden Fläche bewegt und so wieder in das erste Element 51 einrastet (Endstellung).

Der Verlauf des Betätigungssignals, das der Signalgeber 21 an die Signaleinrichtung 22 ausgibt, folgt hingegen einer Sprungfunktion. Ist die Haltevorrichtung 50 derart ausgebildet, dass der Signalgeber 21 die Signaleinrichtung 22 erst bei Verlassen der Betriebsstellung betätigt, so dass die Signaleinrichtung 22 erst dann ein Signal an den Fahrzeugführer ausgibt, erfolgt bei Verdrehen des zweiten Elements 52 gegenüber dem ersten Element 51 zunächst kein Betätigen der Signaleinrichtung 22 durch den Signalgeber 21 (siehe Bezeichnung "aus oder ein" bei 0 mm Ausrasthöhe in Fig. 9). Sobald der Verdrehwinkel jedoch eine gewisse Größe, nämlich einen Schaltwinkel α₁ erreicht hat, der zwischen der Betriebsstellung zu Beginn der Verdrehbewegung (0°) und dem Ausrastwinkel β₁ liegt, betätigt der Signalgeber 21 die Signaleinrichtung 22 (siehe Bezeichnung "ein oder aus" bei x mm Ausrasthöhe in Fig. 9), so dass die Signaleinrichtung 22 ein Signal an die Verarbeitungseinheit 30 ausgeben kann. Mit anderen Worten - Bezug nehmend auf Fig. 8 - bewegt sich zwischen einem Verdrehwinkel von 0° bis α₁ lediglich der Arm 22a die Rampe der Nocke (Signalgeber 21) hinunter. Bei Erreichen des Schaltwinkels α₁ ist der Arm 22a der Signaleinrichtung 22 die Rampe der Nocke vollständig nach unten gelaufen und bewegt sich weiter horizontal. Damit beginnt der Schalter 22b die Signaleinrichtung 22 bei dem Schaltwinkel α₁ zu schalten, so dass sie ein Signal zum Anzeigen, dass die Betriebsstellung verlassen wurde, ausgibt (oder kein Signal ausgibt, wenn die Signaleinrichtung so konzipiert ist, dass sie in Betriebsstellung ein Signal ausgibt). Bei einem Einrastwinkel β₂ beginnt sich der Arm 22a der Signaleinrichtung 22 in die Endstellung zu bewegen, d.h. die Rampe an der Endposition wieder hochzulaufen. Ist der Winkel α₂ erreicht, wird die Signaleinrichtung 22 derart von dem Signalgeber (eine weitere Nocke) betätigt, dass sie ein Signal ausgibt, dass die Endstellung erreicht ist. Die Endstellung ist dadurch definiert, dass ein weiteres Verdrehen des zweiten Elements 52 relativ zu dem zweiten Element 51 durch einen mechanischen Anschlag (nicht gezeigt) verhindert wird.

Durch eine Signalausgabe vor Erreichen des Ausrastwinkels β₁ können Toleranzen betreffend die Signalerzeugungs- und Signalübertragungsbauteile, wie beispielsweise den Signalgeber 21 und die Signaleinrichtung 22, kompensiert werden. Mit anderen Worten wird auf diese Art und Weise trotz toleranzbedingter Verzögerungen in der Signalerzeugung und -übertragung gewährleistet, dass ein Verlassen der Betriebsstellung zwischen dem ersten Element 51 und dem zweiten Element 52 sicher und zuverlässig bei Erreichen des Ausrastwinkels β₁ erkannt wird und entsprechend dem Fahrzeugführer angezeigt wird. Wenn der Ausrastwinkel β₁ beispielsweise etwa 6° (also 6, 2°, 6,5°, etc.) beträgt, kann die Signalerzeugung und-übertragung bereits bei einem Schaltwinkel α₁ von etwa 3° (also 3,2°, 3,5°, etc.) beginnen. Andersherum, wenn sich die Haltevorrichtung aus der Nicht-Betriebsstellung bewegt, wird die Signaleinrichtung 22 nach Passieren des Ausrastwinkels β₂, aber vor Erreichen der Betriebsstellung geschaltet, und zwar bei einem zweiten Schaltwinkel α₂. Auf diese Art und Weise kann sichergestellt werden, dass die Verarbeitungseinheit 30 das Erreichen des Ausrastwinkels bzw. des Einrastwinkels β₂, also das Verlassen der Betriebsstellung bzw. das Einnehmen der Endstellung zuverlässig durch eine entsprechende Signalausgabe (oder Nicht-Signalausgabe) dem Fahrzeugführer anzeigt.

Es ist auch möglich, dass es mehrere Einrastpositionen/-stellungen zwischen der Betriebsstellung und der Endstellung gibt. Die verschiedenen Einrastpositionen können verschiedenen für den Fahrbetrieb/Nicht-Fahrbetrieb erforderlichen Stellungen des zweiten Elements 52 relativ zu dem ersten Element 51 entsprechen. Die Signaleinrichtung 22 kann in diesem Fall derart ausgebildet sein, dass sie die einzelnen Einrastpositionen erkennt und unterscheiden kann (z.B. durch verschiedene geometrische Formen der Nocke, die den Schalter 22a unterschiedlich weit in die Signaleinrichtung 22 rücken).

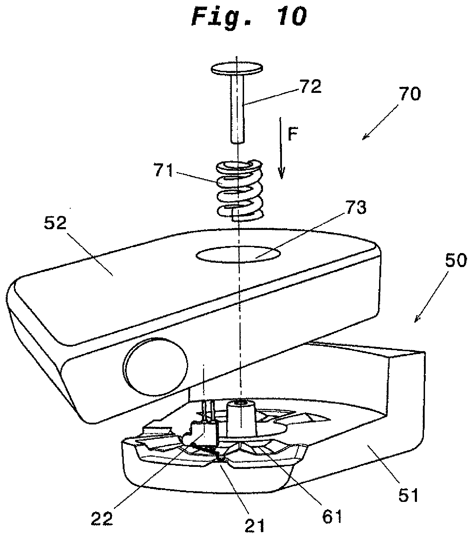

In Fig. 10 ist schließlich ein perspektivischer Ausschnitt der Haltevorrichtung 50 gezeigt, in dem die in Bezug auf Fig. 6 erwähnte Feder 71 zu sehen ist. Im zusammengebauten Zustand befindet sich die Feder 71 in einem Federsitz 73 und ist dort mittels eines Federbefestigungsmittels 72, wie beispielsweise ein Splint, Bolzen, etc. fixiert. Die Feder 71, das Federbefestigungsmittel 72 und der Federsitz 73 bilden zusammen eine Federeinrichtung 70. Die Feder 71 drückt das erste Element 51 mittels der Federkraft F (siehe Pfeil nach unten) derart auf das zweite Element 52, dass die zweite Raste 62 in die erste Raste 61 eingreift. Bei Verdrehung des zweiten Elements 52 gegenüber dem ersten Element 51 derart, dass die Federkraft der Feder 71 überwunden wird, erreicht das zweite Element 52 den sogenannten Ausrastwinkel und die zweite Raste 62 verlässt die erste Raste 61. Liegt die Verdrehung des ersten Elements zu dem zweiten Element jedoch zwischen 0° und β₁ und wird die Verdrehbewegung nicht bis Erreichen von β₁ fortgesetzt, drückt Feder 71 das zweite Element 52 zurück in das erste Element 51, d.h. in die Betriebsstellung.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 1: Fahrzeug
- 10, 10A, 10B: Erfassungseinheit
- 20, 20A, 20B: Signaleinheit
- 21: Signalgeber
- 22a: Arm
- 22b: Schalter
- 22: Signaleinrichtung
- 30, 30A, 30B: Verarbeitungseinheit
- 40A, 40B: Wiedergabeeinheit
- 50: Haltevorrichtung
- 51: erstes Element
- 52: zweites Element
- 53: Drehachse
- 60: Rastvorrichtung
- 61: erste Raste
- 62: zweite Raste
- 70: Federsystem
- 71: Feder
- 72: Federbefestigungsmittel
- 73: Federsitz
- 100A, 100B: Kamera-Monitor-System
- S: Betätigungssignal
- α₁, α₂: Schaltwinkel
- β₁,: Ausrastwinkel
- β₂: Einrastwinkel

## Patentansprüche

1. Haltevorrichtung (50) für ein Fahrzeug (1), enthaltend
ein erstes Element (51), welches an dem Fahrzeug (1) anbringbar ist,
ein zweites Element (52), welches mit dem ersten Element (51) über einen Lagermechanismus beweglich verbunden ist,
eine Bilderfassungseinheit (10, 10A, 10B), die an dem zweiten Element (52) angebracht ist und angepasst ist, dass sie einen Erfassungsbereich um das Fahrzeug (1) herum erfasst, und
eine Signaleinheit (20, 20A, 20B), die angepasst ist, die Position des ersten Elements (51) relativ zu dem zweiten Element (52) zu ermitteln;
wobei die Signaleinheit (20, 20A, 20B) aufweist:
eine Signaleinrichtung (22), die angepasst ist, ein Signal auszugeben, und einen Signalgeber (21), der angepasst ist, dass er die Signaleinrichtung (22) abhängig von einer Stellung des ersten Elements (51) zu dem zweiten Element (52) derart betätigt, dass sie ein Signal (S) an den Fahrer ausgibt, wobei die Stellung des ersten Elements (51) zu dem zweiten Element (52) eine Betriebsstellung umfasst, in der die Bilderfassungseinheit (10, 10A, 10B) einen definierten Erfassungsbereich erfasst, so dass der Fahrzeugführer anhand des Signals erkennen kann, ob er den definierten Erfassungsbereich sieht oder nicht,
wobei die Signaleinrichtung (22) ein Signal (S) ausgibt, wenn sich das erste Element (51) und das zweite Element (52) in der Betriebsstellung befinden, und/oder wobei die Signaleinrichtung (22) ein Signal (S) ausgibt, wenn sich das erste Element (51) und das zweite Element (52) nicht in der Betriebsstellung befinden, und
wobei die Signaleinrichtung (22) das Signal (S) bei einer fest definierten Stellung zwischen dem ersten Element (51) und dem zweiten Element (52) ausgibt, die wenigstens einen definierten Bewegungsbereich zwischen einer Position des ersten Elements (51) zu einer Position des zweiten Elements (52) aufweist.

2. Haltevorrichtung (50) nach Anspruch 1, wobei die Signaleinrichtung (22) im ersten Element (51) und der Signalgeber (21) im zweiten Element (52) angeordnet sind, oder wobei die Signaleinrichtung (22) im zweiten Element (52) und der Signalgeber (21) im ersten Element (51) angeordnet sind.

3. Haltevorrichtung (50) nach Anspruch 1 oder 2, wobei die Signaleinrichtung (22) ein mechanisch betätigter Schalter (21b) und/oder ein Mikroschalter ist, oder wobei die Signaleinrichtung (22) ein berührungslos zu betätigender Sensor ist.

4. Haltevorrichtung (50) nach einem der vorhergehenden Ansprüche, wobei der Lagermechanismus ein Schwenkmechanismus mit einer Drehachse ist, die in einem am Fahrzeug (1) montierten Zustand in der Höhenrichtung des Fahrzeugs (1) verläuft, oder wobei der Lagermechanismus ein Schiebemechanismus ist.

5. Haltevorrichtung (50) nach einem der vorhergehenden Ansprüche, ferner enthaltend eine Rasteinrichtung (60), die wenigstens eine Raststellung aufweist.

6. Haltevorrichtung (50) nach einem der Ansprüche 4 oder 5, wobei der Signalgeber (21) eine geometrische Form aufweist, durch die die Signaleinrichtung (22) betätigt wird, wobei die geometrische Form vorzugsweise wenigstens einen Vorsprung in Richtung der Drehachse (53) des Schwenkmechanismus aufweist und radial um die Drehachse herum angeordnet ist, wobei die geometrische Form weiter vorzugsweise in die Rasteinrichtung (60) integriert ist.

7. Haltevorrichtung (50) nach einem der Ansprüche 1 bis 5, wobei der Signalgeber (21) ein Magnetfeld oder ein induktives Feld erzeugt, durch das die Signaleinrichtung (22) betätigt wird.

8. Haltevorrichtung (50) nach einem der vorhergehenden Ansprüche, ferner enthaltend eine Verarbeitungseinheit (30, 30A, 30B), die angepasst ist, die Bilddaten der Bilderfassungseinheit (10, 10A, 10B) zu verarbeiten, wobei die Verarbeitungseinheit (30, 30A, 30B) vorzugsweise in dem ersten Element (51) und/oder dem zweiten Element (52) und/oder dem Fahrzeug (1) angeordnet ist.

9. Haltevorrichtung (50) nach Anspruch 8, wobei die Verarbeitungseinheit (30A, 30B, 30b) ferner angepasst ist, die Informationen der Signaleinrichtung (22) zu verarbeiten, oder wobei die Verarbeitungseinheit (30, 30A, 30B) angepasst ist, die Bilderfassungseinheit (10, 10A, 10B) und/oder die Signaleinrichtung (22) zu steuern.

10. Haltevorrichtung (50) nach einem der vorhergehenden Ansprüche, wobei die Bilderfassungseinheit (10, 10A, 10B) eine Kameraeinrichtung und/oder eine Sensoreinrichtung ist, wobei die Bilderfassungseinheit (10, 10A, 10B) vorzugsweise angepasst ist, wenigstens ein gesetzlich vorgeschriebenes Sichtfeld zu erfassen.

11. Haltevorrichtung (50) nach einem der vorhergehenden Ansprüche, wobei die von der Bilderfassungseinheit (10, 10A, 10B) erfassten Bilddaten auf einer Wiedergabeeinheit (40A, 40B) wiedergegeben werden.

12. Haltevorrichtung nach einem der vorhergehenden Ansprüche, wobei die Signaleinrichtung (22) von dem Signalgeber (21) bei einem Schaltwinkel (α₁, α₂) betätigt wird, der der Winkel ist, um den das zweite Element relativ zu dem ersten Element verdreht ist, wenn die Signaleinrichtung geschaltet wird, und der kleiner als ein Ausrastwinkel (β₁, β₂) ist, bei dem das zweite Element (52) die Betriebsstellung verlässt.

13. Kamera-Monitor-System (100A, 100B) für ein Fahrzeug, enthaltend eine Haltevorrichtung (50) nach einem der Ansprüche 1 bis 12, und eine Wiedergabeeinheit (40A, 40B), die im Inneren des Fahrzeugs (1) derart angebracht werden kann, dass sie von einem Fahrer einsehbar ist.

## Claims

1. Holding apparatus (50) for a vehicle (1), comprising
a first element (51) which is attachable to the vehicle (1),
a second element (52) which is movably connected to the first element (51) via a bearing mechanism,
an image capture unit (10, 10A, 10B) which is attached to the second element (52) and which is configured to capture a capture area around the vehicle (1), and
a signal unit (20, 20A, 20B) which is configured to detect the position of the first element (51) relatively to the second element (52);
wherein the signal unit (20, 20A, 20B) comprises:
a signal device (22) which is configured to output a signal, and
a signal transmitter (21) which is configured to operate the signal device (22) dependent on a position of the first element (51) to the second element (52) such that it outputs a signal (S) to the driver, wherein the position of the first element (51) to the second element (52) comprises an operating position in which the image capture unit (10, 10A, 10B) captures a defined capture area such that the vehicle driver can identify whether he views the defined capture area or not based on the signal (S),
wherein the signal device (22) outputs a signal (S) if the first element (51) and the second element (52) are in the operating position, and/or wherein the signal device (22) outputs a signal (S) if the first element (51) and the second element (52) are not in the operating position, and
wherein the signal device (22) outputs the signal (S) at a fixedly defined position between the first element (51) and the second element (52) which has at least a defined movement area between a position of the first element (51) to a position of the second element (52).

2. Holding apparatus (50) according to claim 1, wherein the signal device (22) is arranged in the first element (51) and the signal transmitter (21) is arranged in the second element (52), or wherein the signal device (22) is arranged in the second element (52) and the signal transmitter (21) is arranged in the first element (51).

3. Holding apparatus (50) according to claim 1 or 2, wherein the signal device (22) is a mechanically operated switch (21b) and/or a micro switch, or wherein the signal device (22) is a contactless to be operated sensor.

4. Holding apparatus (50) according to any one of the preceding claims, wherein the bearing mechanism is a rotating mechanism with a rotating axis which extends in the height direction of the vehicle (1) in a state in which it is mounted on the vehicle, or wherein the bearing mechanism is a sliding mechanism.

5. Holding apparatus (50) according to any of the preceding claims, further comprising an engagement device (60) which comprises at least one engagement position.

6. Holding apparatus (50) according to any one of claims 4 or 5, wherein the signal transmitter (21) has a geometric shape by which the signal device (22) is operated, wherein the geometric shape has preferably at least one projection in the direction of the rotating axis (53) of the rotating mechanism and is arranged radially around the rotating axis, wherein further preferably the geometric shape is integrated in the engagement device (60).

7. Holding apparatus (50) according to any one of claims 1 to 5, wherein the signal transmitter (21) generates a magnetic field or an inductive field by which the signal device (22) is operated.

8. Holding apparatus (50) according to any one of the preceding claims, further comprising a processing unit (30, 30A, 30B) which is configured to process the image data of the image capture unit (10, 10A, 10B), wherein preferably the processing unit (30, 30A, 30B) is arranged in the first element (51) and/or the second element (52) and/or the vehicle (1).

9. Holding apparatus (50) according to claim 8, wherein the processing unit (30, 30A, 30B) is further configured to process the information of the signal device (22), or wherein the processing unit (30, 30A, 30B) is configured to control the image capture unit (10, 10A, 10B) and/or the signal device (22).

10. Holding apparatus (50) according to any one of the preceding claims, wherein the image capture unit (10, 10A, 10B) is a camera device and/or a sensor device, wherein the image capture unit (10, 10A, 10B) is preferably configured to capture at least one legally prescribed field of view.

11. Holding apparatus (50) according to any one of the preceding claims, wherein the image data captured by the image capture unit (10, 10A, 10B) are reproduced on a reproduction unit (40A, 40B).

12. Holding apparatus (50) according to any one of the preceding claims, wherein the signal device (22) is operated by the signal transmitter (21) at a switching angle (α₁, α₂) which is an angle around which the second element (52) is rotated relatively to the first element, if the signal device (22) is switched and which is smaller than a disengagement angle (β₁, β₂) at which the second element (52) exits the operating position.

13. Camera monitor system (100A, 100B) for a vehicle, comprising
a holding apparatus (50) according to any one of claims 1 to 12, and
a reproduction unit (40A, 40B) which can be attached inside the vehicle (1) such that it is viewable by a driver.

## Revendications

1. Dispositif de retenue (50) pour un véhicule (1), contenant
un premier élément (51), lequel peut être fixé au véhicule (1),
un second élément (52), lequel est relié de manière mobile au premier élément (51) par l'intermédiaire d'un mécanisme à palier,
une unité de capture d'image (10, 10A, 10B), qui est fixée au second élément (52) et conçue de sorte qu'elle capture une plage de capture autour du véhicule (1), et
une unité de signalisation (20, 20A, 20B), qui est conçue pour déterminer la position du premier élément (51) par rapport au second élément (52) ;
dans lequel l'unité de signalisation (20, 20A, 20B) présente :
un appareil de signalisation (22), qui est conçu pour générer un signal, et
un générateur de signal (21), qui est conçu de sorte qu'il actionne l'appareil de signalisation (22) en fonction d'une position du premier élément (51) par rapport au second élément (52) de telle manière qu'il génère un signal (S) vers le conducteur, dans lequel la position du premier élément (51) par rapport au second élément (52) comprend une position de fonctionnement dans laquelle l'unité de capture d'image (10, 10A, 10B) capture une plage de capture définie, de sorte que le conducteur du véhicule peut savoir à l'aide du signal s'il voit ou non la plage de capture définie,
dans lequel l'appareil de signalisation (22) génère un signal (S) lorsque le premier élément (51) et le second élément (52) se trouvent dans la position de fonctionnement, et/ou dans lequel l'appareil de signalisation (22) génère un signal (S) lorsque le premier élément (51) et le second élément (52) ne se trouvent pas dans la position de fonctionnement, et
dans lequel l'appareil de signalisation (22) émet le signal (S) pour une position bien définie entre le premier élément (51) et le second élément (52), qui présente au moins une plage de mouvement définie entre une position du premier élément (51) et une position du second élément (52).

2. Dispositif de retenue (50) selon la revendication 1, dans lequel l'appareil de signalisation (22) est agencé dans le premier élément (51) et le générateur de signal (21) dans le second élément (52), ou dans lequel l'appareil de signalisation (22) est agencé dans le second élément (52) et le générateur de signal (21) dans le premier élément (51).

3. Dispositif de retenue (50) selon la revendication 1 ou 2, dans lequel l'appareil de signalisation (22) est un interrupteur à commande mécanique (21b) et/ou un micro-interrupteur, ou dans lequel l'appareil de signalisation (22) est un capteur pouvant être actionné sans contact.

4. Dispositif de retenue (50) selon l'une quelconque des revendications précédentes, dans lequel le mécanisme à palier est un mécanisme à pivot avec un axe de rotation qui s'étend dans la direction verticale du véhicule (1) lorsqu'il est monté sur le véhicule (1), ou dans lequel le mécanisme à palier est un mécanisme coulissant.

5. Dispositif de retenue (50) selon l'une quelconque des revendications précédentes, comprenant en outre un appareil de verrouillage (60), qui présente au moins une position de verrouillage.

6. Dispositif de retenue (50) selon la revendication 4 ou 5, dans lequel le générateur de signal (21) présente une forme géométrique grâce à laquelle l'appareil de signalisation (22) est actionné, dans lequel la forme géométrique présente de préférence au moins une saillie en direction de l'axe de rotation (53) du mécanisme à pivot et est agencée de manière radiale autour de l'axe de rotation, dans lequel la forme géométrique est en outre de préférence intégrée dans l'appareil de verrouillage (60).

7. Dispositif de retenue (50) selon l'une quelconque des revendications 1 à 5, dans lequel le générateur de signal (21) génère un champ magnétique ou un champ inductif grâce auquel l'appareil de signalisation (22) est actionné.

8. Dispositif de retenue (50) selon l'une quelconque des revendications précédentes, comprenant en outre une unité de traitement (30, 30A, 30B), qui est conçue pour traiter les données d'image de l'unité de capture d'image (10, 10A, 10B), dans lequel l'unité de traitement (30, 30A, 30B) est de préférence agencée dans le premier élément (51) et/ou dans le second élément (52) et/ou dans le véhicule (1).

9. Dispositif de retenue (50) selon la revendication 8, dans lequel l'unité de traitement (30A, 30B, 30b) est en outre conçue pour traiter les informations de l'appareil de signalisation (22), ou dans lequel l'unité de traitement (30, 30A, 30B) est conçue pour commander l'unité de capture d'image (10, 10A, 10B) et/ou l'appareil de signalisation (22).

10. Dispositif de retenue (50) selon l'une quelconque des revendications précédentes, dans lequel l'unité de capture d'image (10, 10A, 10B) est un appareil formant caméra et/ou un appareil de détection, dans lequel l'unité de capture d'image (10, 10A, 10B) est conçue de préférence pour capturer au moins un champ de vision légalement prescrit.

11. Dispositif de retenue (50) selon l'une quelconque des revendications précédentes, dans lequel les données d'image capturées par l'unité de capture d'image (10, 10A, 10B) sont restituées sur une unité de restitution (40A, 40B).

12. Dispositif de retenue selon l'une quelconque des revendications précédentes, dans lequel l'appareil de signalisation (22) est actionné par le générateur de signal (21) avec un angle de commutation (α₁, α₂) qui est l'angle autour duquel le second élément tourne par rapport au premier élément lorsque l'appareil de signalisation est commuté, et qui est inférieur à un angle de débrayage (β₁, β₂) auquel le second élément (52) quitte la position de fonctionnement.

13. Système de surveillance par caméra (100A, 100B) pour un véhicule, comprenant
un dispositif de retenue (50) selon l'une quelconque des revendications 1 à 12, et
une unité de restitution (40A, 40B) qui peut être mise en place à l'intérieur du véhicule (1) de telle manière qu'elle peut être vue par un conducteur.
